# EUROPEAN PATENT APPLICATION

(11) **EP 0 583 021 A1**
(43) Date of publication of application: **16.02.1994**
(21) Application number: 93202107.4
(22) Date of filing: 19.07.1993
(51) Int. Cl.: H01M 2/28, H01M 2/24

(54) **Method of forming plate straps in a storage battery and said assembled storage battery**

(30) Priority: 13.08.1992 US 929043
(71) Applicant: GENERAL MOTORS CORPORATION, Detroit Michigan 48202 (US)
(72) Inventor: Mix, Renard Eugene, Yorktown, Indiana 47396 (US)
(74) Representative: Denton, Michael John

(57) **Abstract**

Method for forming a plate strap (46) for a lead-acid battery having fibrous glass interplate separators (30) wherein a mould (10) is placed about a set of aligned plate lugs (26), a compressed portion (32) of the separators (30) serves as a floor of a mould cavity (16) and the cavity (16) is filled with molten lead.

## Description

This invention relates to lead-acid storage batteries and particularly to the joining of like-polarity plate lugs together therein by moulding a lead connector thereabouts.

Lead-acid storage batteries comprise several galvanic cell elements each encased in separate compartments of a substantially leak-proof, thermoplastic container containing sulphuric acid electrolyte. Each cell element comprises at least one plate-like, positive electrode (i.e., a positive plate), one plate-like negative electrode (i.e., a negative plate) and a porous, dendrite-suppressing separator therebetween. In a conventional battery, the separator typically comprises a microporous polymeric membrane (e.g., polyethylene). In a so-called "gas-recombinant" battery, the separator typically comprises a fibrous (e.g., glass) mat which prevents the tendency for oxygen generated at one plate to migrate across the inter-electrode gap to an opposite plate and to re-combine with hydrogen thereat. One class of separators for such batteries is described in U.S. 3,862,861 (McClelland et al) and comprises fibrous glass mat wherein the diameter of the fibres is between 0.2 to about 10 micrometres and the fibres have a surface area between about 0.1 and 20 metres/gram of silica. Moreover, glass mats useful for gas-recombinant batteries are commercially available from the Hollingsworth & Vose Company, U.S.A.., and are sold under the trade name HOVOSORB^{R}. Some heavy-duty batteries also employ glass mat separators, but are not necessarily gas-recombinant batteries owing to the properties/structure of the mat.

Multi-plate cell elements are commonplace and comprise a stack of alternating positive and negative polarity plates interleaved one with the other and separators therefor. The plates themselves each comprise: (1) a conductive grid work which supports an electrochemically-active material thereon and (2) a lead-containing active material (i.e., lead dioxide (PbO₂) for the positive plates and lead (Pb) for the negative plates) on the grid. A lug projects from each plate and serves to electrically couple its associated plate to other electrical components of the battery. For example, aligned lugs of like polarity plates of a multi-plate cell element are commonly electrically coupled one to the other, and to intercell connectors or terminals, by a so-called "plate strap" which is typically burned to, or cast about, the lugs of the plates. Heretofore, essentially four techniques have been proposed to make such plate straps.

In the first technique, comb-like iron tooling is inter-digitated with the lugs to form a mould around and between the lugs, a pre-cast plate strap having a plurality of toes is inter-digitated with the plate lugs in the mould and is burned (i.e., welded) to the plate lugs by means of a gas torch applied directly thereto. Thereafter, the tooling is withdrawn. This technique has been used commercially for many years.

In the second technique, upstanding plate lugs are enclosed in a mould similar to that described above, and molten lead is poured into the mould at one end to flow and form the plate strap. This technique never achieved widespread, if any, commercial use presumably owing to the inability to reliably implement such a process on a production scale. In this regard, metal which was poured into the mould at a single site was expected to spread uniformly throughout the mould (i.e., in and around the upstanding plate lugs) and still bond well to the lugs. However, non-uniform distribution of the lead in the mould as well as non-uniform cooling of the melt usually occurred and resulted in poor-quality, high-resistance connections between the plate lugs and plate strap.

A third technique is a variation of the second wherein an open-topped mould is first filled with a predetermined amount of molten lead and thereafter the plate lugs of an inverted cell element are immersed therein. The solidified strap, with lugs attached, is subsequently removed from the mould, the cell element returned to its upright position and finally inserted into a battery container. The aforesaid third technique substantially eliminated the non-uniform flow, cooling and heat-distribution problems of the second technique and has been used commercially for many years.

The fourth technique is described in U.S. patent 4,742,611 (Meadows et al), which is incorporated herein by reference, and wherein like polarity plate lugs in one cell element are joined to each other and to opposite polarity plate lugs in the next adjacent cell element by substantially oxide-free, arc-melted, molten lead cast about the lugs and through an open -topped slot formed in the upper edge of an intercell partition which separates the two cell elements from each other. The lugs themselves are shielded from the arc whilst being bathed in a heated non-oxidising gas emanating from an arc generator which reduces oxide formation and aids in maintaining the temperature of the melt zone.

All of the aforesaid techniques require the use of a mould having both side walls for laterally containing the molten lead and an integral floor, including a plurality of lug-receiving apertures therethrough, to keep the molten lead from draining out of the mould cavity and between the plates of the element. Because of the floor, the mould must either be left with the battery after the strap has been cast (i.e., a permanent mould), or, in the case of temporary mould tooling, extracted from beneath the solidified strap after casting is complete. Placement of such a permanent mould over the many lugs with all of its lug-receiving apertures registered with the lugs is difficult to accomplish. Hence, such conventional, bottom-floored moulds complicate and add cost to, the assembly process.

It is an object of the present invention to simplify the process of moulding plate straps onto plate lugs by eliminating the need for moulds having an integral floor therein. This and other objects and advantages of this invention will become more readily apparent from the detailed description thereof which follows.

A method of forming a plate strap in a lead-acid storage battery according to the present invention is characterised by the features specified in the characterising portion of claim 1.

Whilst not limited thereto, the method of the present invention is preferably employed in connection with the molten lead casting process described in U.S. 4,742,611 (Meadows et al) (which is incorporated herein by reference) and accordingly will be described primarily in the context of that process. U.S. 4,742,611 (Meadows et al) involves the indirect application of a gas tungsten arc to provide heated gas and substantially oxide-free, lead melt to a plate strap mould. That process provides molten lead from a Pb wire fed into a melt dispenser. The term "lead" as used herein is intended to include not only pure lead but also lead alloys typically found in Pb-acid batteries e.g., lead alloys containing antimony (Sb), tin (Sn), arsenic (As), aluminium (Al), and calcium (Ca). That method is preferably employed with the present invention to connect a set of aligned, upstanding, like-polarity, lead-acid storage battery plate lugs to each other in a single cell element, and to connect such a cell element to an adjacent cell element in a single operation via an intercell connector concurrently formed through an opening in an intercell partition separating adjacent cell compartments of a battery container. More specifically, a floor-less mould having a mould cavity and a mouth at the bottom thereof for admitting plate lugs into the cavity is positioned along the sides of each set of aligned lugs for receiving and shaping molten lead dispensed therein. The mouth of the mould is sealed against lead leakage by compressing a perimetrical portion of fibrous glass mat extending above the upper edges of the plates of the element by about 4.76 mm (3/16 inch) or more. The perimetrical portion is compressed sufficiently to prevent passage of molten lead therethrough and between the plates of the cell element. Compression of the mat is most easily effected by means of the underside of the mould pressing down on the top thereof. The moulds, temporary or permanent, are aligned with each other on opposite sides of the intercell opening through which the intercell connector will be formed. An appropriate flux (e.g., dissolved and dehydrated azelaic acid), is applied to the lugs. During casting, the length of each of the aligned moulds is traversed from one end to the other with an arc-melting and molten-lead dispensing device such as described in U.S. 4,742,611 (Meadows et al) (supra). Such a device comprises essentially: a substantially non-consumable electrode for generating an electric arc; means for supplying an ionizable, non-oxidising gas to the arc; means for shielding the lugs in the moulds from the electric arc; means for feeding a continuous length (of lead wire) into the arc for melting therein; and means for directing a stream of super-heated molten lead formed in the arc into the mould cavity surrounding the lugs.

In operation, a substantially continuous length of lead wire is fed into the arc generated by the electrode at a rate commensurate with the rate at which the dispensing means traverses the mould so as to provide a substantially continuous stream of superheated, substantially oxide-free melt sufficient to melt and encompass the lugs in the mould by the time the dispensing means reaches the end thereof. The arc itself is generated in an ionizable, non-oxidising gas which supports the arc whilst at the same time prevents oxidation of the ultra-hot molten lead formed therein. Similarly, the mould is blanketed with a substantially non-oxidising gas so as to prevent oxidation of the cooler, but none-the-less vulnerable, melt therein. The non-oxidising gas which blankets the mould may be supplied separately from the arc-supporting gas. Preferably, however, arc-supporting gas which has been heated by the arc is caused to exit the dispensing device so as to impinge directly onto the lugs thereby not only providing a non-oxidising atmosphere but also adding significant additional heat to the lugs therein for facilitating the melting and amalgamation thereof with the arc-melted molten lead.

The arc-melting and dispensing device preferably includes a housing defining a melting chamber surrounding the arc which is pressurised by the ionizable, non-oxidising gas so as to prevent the influx of air to the melting zone where the ultra-hot molten lead is most vulnerable to oxidation. The housing carries a nozzle which, (1) directs the stream of molten lead into each mould, whilst protecting it from oxidation as it moves from the arc into the mould; and (2) directs ionizable, non-oxidising gas, which has been heated by the arc, directly down onto the lugs so as to add significant additional heat thereto to promote a more rapid amalgamation of the lugs with the arc-melted lead stream. The heated gases exiting the nozzle will preferably be of sufficient quantity to substantially blanket the mould therewith and thereby obviate the need for a secondary source of non-oxidising gas to protect the melt in the mould.

In addition to forming just a plate strap, the process of the present invention may also be used to form plate straps on two adjacent cell elements and an intercell connector therebetween in a single casting operation. In this regard, the moulds about the lugs of each cell element are aligned on opposite sides of an opening in the intercell partition and together therewith form a substantially continuous mould running the length of two adjacent cell compartments. The molten lead is dispensed into the mould preferably by the process described in U.S. 4,742,611 (Meadows et al) (supra). Alternatively, the lead may be poured from a ladle, or the like, or melted, in situ, as discussed above and hereafter.

The invention will better be understood when considered in the light of the following detailed description of certain specific embodiments thereof which is given hereafter in conjunction with the accompanying drawings, in which:
Figure 1 is a perspective view of a battery and lead-dispensing apparatus for forming plate straps in accordance with the present invention;
Figure 2 is a sectioned side view taken in the direction 2-2 of Figure 1;
Figure 3 is a sectioned side elevational view taken in the direction 3-3 of Figure 2;
Figure 4 is a view taken in the direction 4-4 of Figure 3;
Figure 5 is a partial top elevational view taken in the direction 5-5 of Figure 3;
Figure 6 is a perspective view of a battery employing another embodiment of the present invention;
Figure 7 is a sectioned side view taken in the direction 7-7 of Figure 6;
Figure 8 is a view taken in the direction 8-8 of Figure 7, taken as though the vinyl cover is not in place;
Figure 9 is a view of an underside of an intermediate cover taken in the direction 9-9 (sans glass mat) of Figure 7;
Figure 10 is a partially broken-away, perspective view of a battery container in accordance with still another embodiment of the present invention;
Figure 11 is a sectioned, side view of a fully-assembled battery utilising the container of Figure 10; and
Figure 12 is a sectioned, side view similar to that of Figure 2, showing still another embodiment of the present invention.

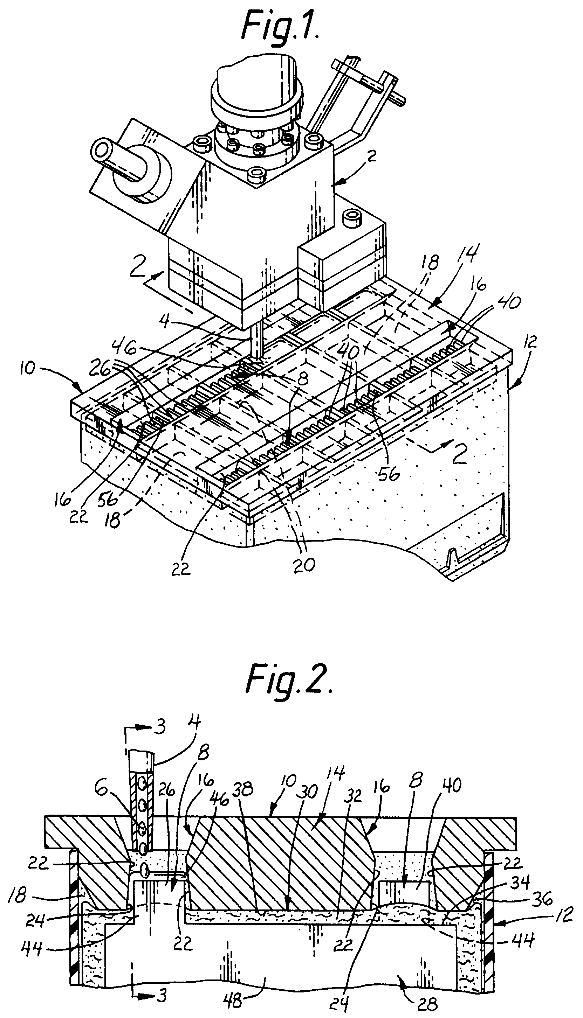

Figures 1 and 2 show a molten-lead dispenser 2 of the type described in U.S. 4,742,611 (Meadows et al) (supra) having a nozzle 4 for dispensing a stream of molten lead 6 on top of a set of aligned battery plate lugs 8 surrounded by a mould 10 sitting on top of a battery container 12 in which cell elements thereof have been pre-placed. The mould 10 comprises a body 14 having a mould cavity 16 defined by side walls 22 and having a bottom-opening mouth 24 for receiving/admitting plate lugs 26 into the mould cavity 16. The battery container 12 has a plurality of cell compartments 18, each separated one from the other by a partition 20 and being adapted to house an individual cell element.

The plate lugs 26 project upwardly from their corresponding plates 28. The plates themselves are each separated from the next adjacent plate in the cell element by a bibulous fibrous glass separator 30. The perimeter of separator 30 extends beyond the edges of the plates and particularly has an upper perimetrical portion 32 which extends above a top edge 34 of each plate 28 by at least about 4.76 mm (3/16 of an inch). The mould member 10 is chamfered at the bottom 36 thereof to facilitate guiding of the mould into the container 12. A bottom surface 38 of the mould 10 presses down on and compresses the perimetrical portion 32 of the separator 30 between and in the vicinity of lugs 26 and 40 (i.e., of the next adjacent plate). Compression of the perimetrical portion 32 of the glass mat so compacts the glass mat about the roots 44 of the lugs 26 and 40 that molten lead 6 introduced into the mould cavity 16 will not pass therethrough and drain from the cavity 16 into the cell elements. After the molten metal has solidified, the mould 10 is removed and re-used in the assembly of other batteries. Preferably, the side walls 22 of the mould cavity 16 have a slight taper thereon so as to provide a draught angle on plate strap 46 for ready removal of the mould 10 therefrom.

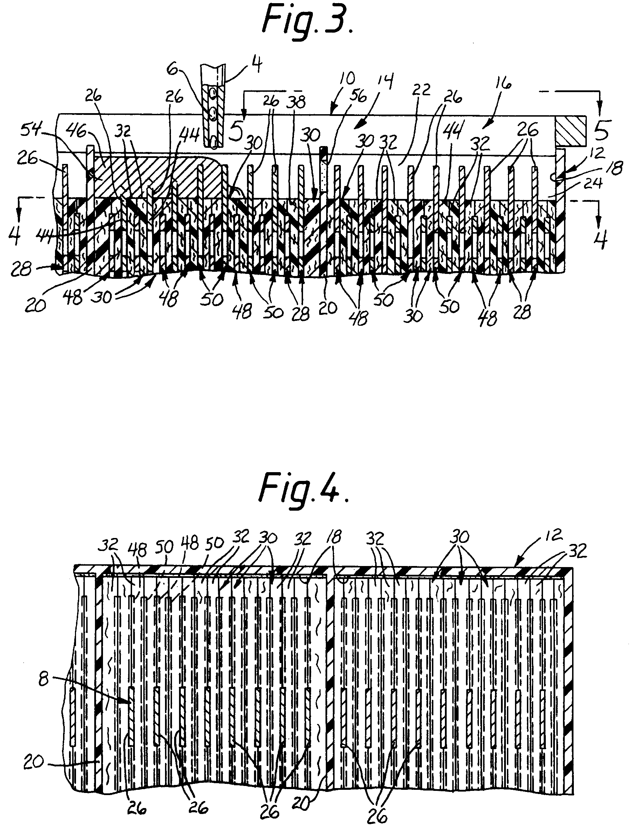

As best shown in Figure 3, the fibrous glass separator 30 separates negative polarity plates 48 from positive polarity plates 50 stacked adjacent thereto in the cell elements. In that Figure, the positive polarity lugs on the left side of the Figure are joined together by plate strap material 54 dispensed from the nozzle 4 as the nozzle moves in the direction left to right. The molten lead which forms the plate strap 54 will completely encompass the set of lugs on the left side of the partition 20, flow through an opening 56 in the partition 20, and completely encompass the lugs of opposite polarity plates in the cell element on the right side of the partition 20. In each case, the compressed perimetrical portion 32 of the glass mat material 30 serves to form the floor of the cavity 16 and prevents the molten lead 6 from passing therethrough and escaping out the bottom of the cavity 16. The mould 10 shown in Figures 1-5 is a temporary mould in that it is placed on the battery container 12, used only during the pouring and solidification of the molten lead and thereafter removed and re-used in the forming of plate straps in other batteries.

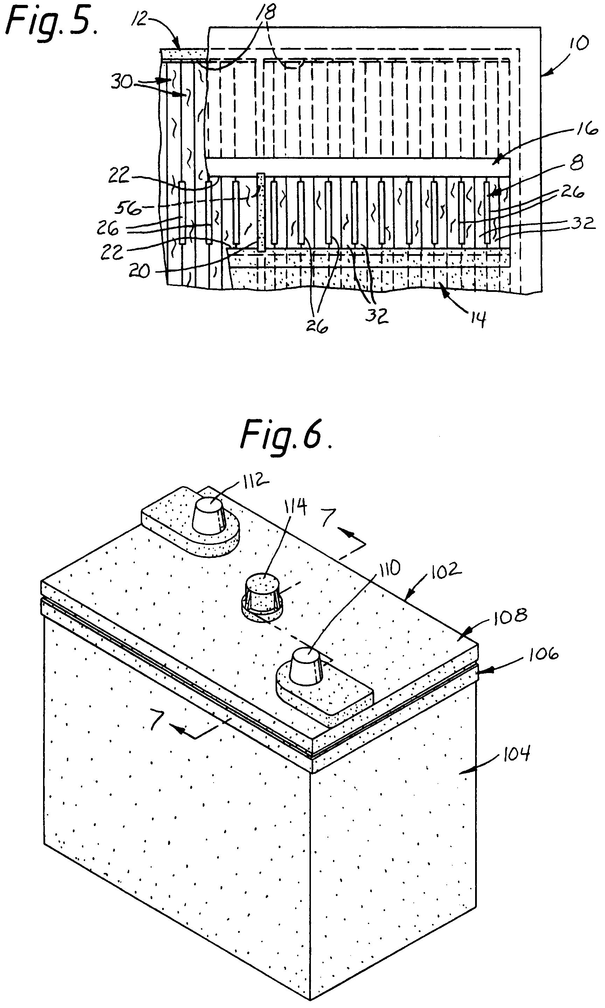

Figures 6-9 depict another embodiment of the present invention wherein the strap-forming mould is a permanent mould (i.e., remains with the battery) and forms part of a cover system for the battery. Figure 6 depicts a perspective view of a battery 102 comprising a container 104, an intermediate cover 106 and a final cover 108. The battery 102 has a positive polarity terminal 110 and a negative polarity terminal 112, and a vent cap 114 for relieving any untoward pressure build up within the battery 102. The vent cap 114 is connected to all three cells of the battery via a manifold 116 formed in an upper surface of the intermediate cover 106. Electrolyte is added to each cell and the gases vented from each cell by individual openings 118 connecting the manifold 116 with the interior of each cell compartment. The intermediate cover 106 is preferably secured to the top edge of the container 104 by heat-sealing as is well known to those skilled in the art. Intermediate cover 106 includes mould portions 120 which are integrally moulded into the intermediate cover 106 and include downwardly-opening mouths 122 for admitting plate lugs 124 and 126 into a mould cavity 128 within the mould 120. Roots 130 of the lugs 124 as well as an underside portion 132 of the cover 106 adjacent the mouths 122 serve to compress a perimetrical portion 134 of a glass mat 136 in the vicinity of the roots 130 of the lugs for forming the floor of the mould cavity 128. Molten lead introduced into the mould cavity 128 is prevented from leaving the mouth 122 of the mould cavity by means of the compressed glass mat thereat. Intercell partitions 140 integral with container 104 separate the cell compartments one from the next.

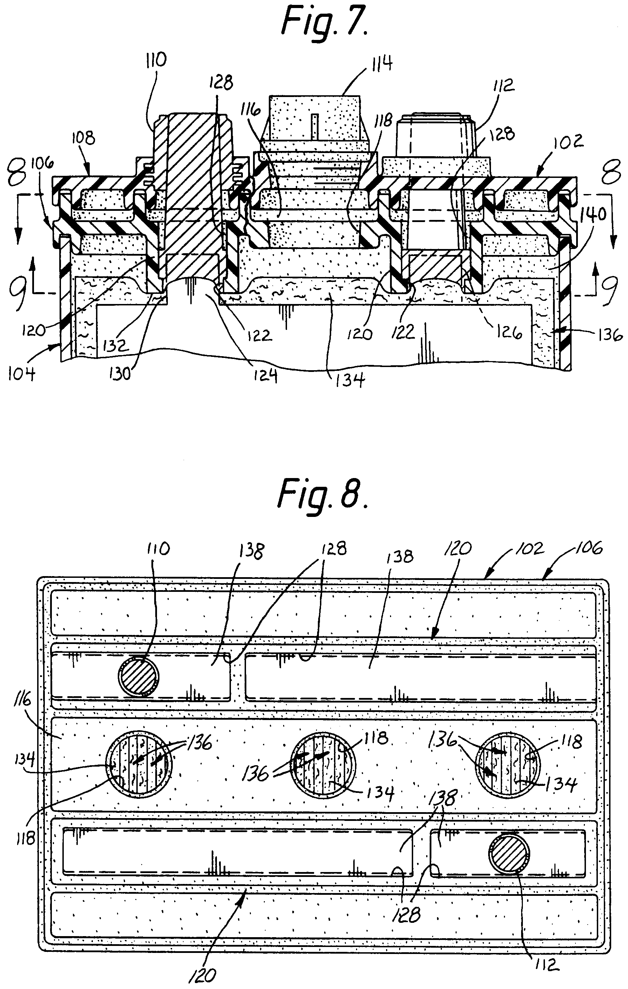

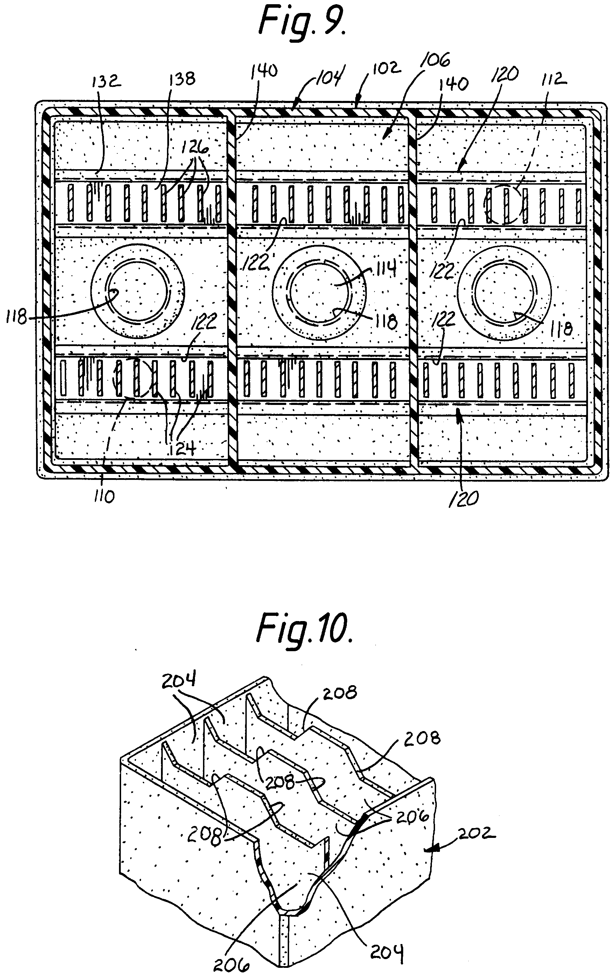

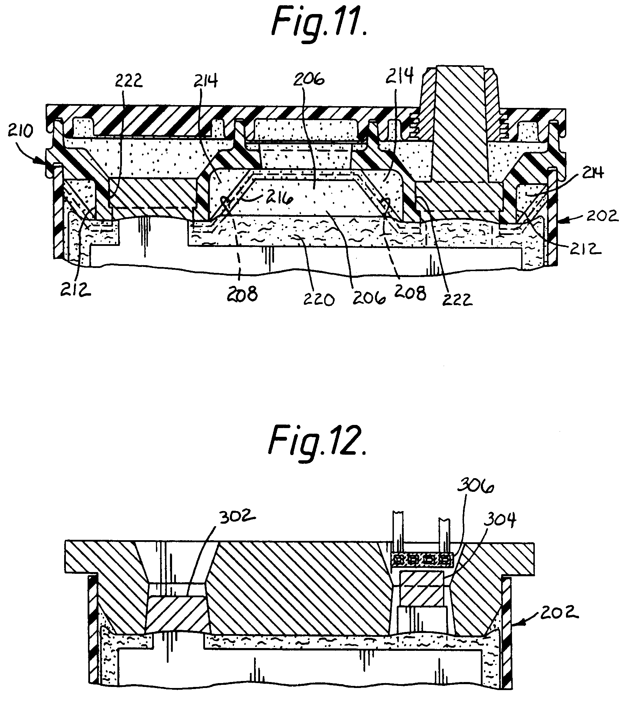

Figures 10 and 11 depict still another embodiment of the present invention. Figure 10 depicts a partially broken-away empty battery container 202 having a plurality of compartments 204 separated one from the other by a plurality of intercell partitions 206. The intercell partitions have openings 208 in the upper edge thereof for mating with an intermediate cover 210, best shown in Figure 11. In this regard, the intermediate cover 210 includes trough-like mould portions 212, each of which is essentially the same as that described in connection with Figures 7-9, and depending web portions 214. Each web portion 214 has a U-shaped channel 216 on the underside thereof adapted to receive, in tongue-and-groove fashion, an upper edge of a respective intercell partition 206. The upper edge of the intercell partition 206 mates with the U-shaped channel 216 and is heat-sealed or otherwise bonded therein. A perimetrical portion 220 of a glass separator is compressed by an underside of each mould 212 and serves to provide the floor for a mould cavity 222 within the mould 212.

Figure 12 depicts still another embodiment of the present invention wherein a plate strap 302 is formed by melting a solid bar 304 of lead alloy by means of an induction-heating electrode 306 positioned thereabove. Alternatively, a gas torch may be substituted for the induction-heating electrode. Hence, in situ melting of a solid bar, or simply pouring/casting molten metal from a ladle, or the like, into the mould cavity are alternative techniques to the preferred arc-melting technique described above.

Whilst the invention has been disclosed primarily in terms of specific embodiments thereof, it is not intended to be limited solely thereto but rather only to the extent set forth hereafter, in the claims which follow.

The disclosures in United States patent application No. 929,043, from which this application claims priority, and in the abstract accompanying this application are incorporated herein by reference.

## Claims

1. A method of forming a plate strap (54,46) in a lead-acid storage battery, said plate strap (54,46) joining a set of aligned, upstanding, like-polarity, lead-acid, storage battery plate lugs (8,26,40) together in a cell element comprising a plurality of first polarity plates (48) alternately interleaved with a plurality of opposite polarity plates (50), said plates (48,50) each being separated one from the other by a bibulous, fibrous, glass mat (30;136) and having a plate lug (8,26,40) projecting therefrom, wherein said lug (8,26,40) has a root portion (44;130) proximate said plate (48,50) and a distal portion remote from said plate (48,50) for joining to said plate strap (54,46), said method comprising the steps of: stacking said plates (48,50) in said cell element so that lugs (8,26,40) of like polarity plates are aligned with each other along one side of said cell element, positioning a mould (10;120;212) about said set of aligned lugs (8,26,40), said mould (10;120;212) comprising a body (14) having an under surface (38;132) and a pair of opposing, internal walls (22;122) defining a mould cavity (16;128;222) for shaping said plate strap (54,46), filling said cavity (16;128;222) with sufficient molten lead (6) to melt said lugs (8,26,40) and to form said plate strap (54,46), and allowing said lead to solidify and to bond said lugs (8,26,40) together via said plate strap (54,46), characterised in that a perimetrical portion (32;134;220) of said glass mat (30;136) projects beyond the edges of said plates (8,26,40) along said one side, said portion (32;134;220) has a mould-forming segment compressed between said root portions (44;130) of adjacent like-polarity lugs (8,26,40) so as to prevent molten lead deposited thereon from passing therethrough; said cavity (16;128;222) has a mouth (24;122) on the underside of said body (14) for admitting said like-polarity lugs (8,26,40) into said cavity (16;128;222), and said under surface (38;132) engages said mat (30;136) so as to close-off said mouth (24;122) and to form a floor for said cavity (16;128;222) with said mat (30;136); said mat (30;136) serving to prevent said molten lead (6) from draining from said cavity (16;128;222) via said mouth (24;132).

2. A method according to claim 1, in which said mould (10) comprises tooling which is removed from the battery after said lead has solidified.

3. A method according to claim 1, in which said mould (120;212) remains with the battery after the lead has solidified.

4. A method according to claim 3, in which said mould (120;212) comprises part of a cover (106,108;210) for the battery.

5. A method according to claim 4, in which said mould (120) comprises an elongated trough (120;212) depending from an underside of said cover (106;210).

6. A method according to claim 4, in which said cover is an intermediate cover (106;210) positioned between a battery container (104;202) and a final cover (108).

7. A method according to claim 2, in which said internal opposing walls (22) are tapered so as to provide a draught angle on said strap (54,46) formed in said cavity (16) for ready removal of said mould (10) from said strap (54,46).

8. A method according to claim 1, in which said molten lead (6) is cast into said cavity (16;128) from an external source (2) thereof.

9. A method according to claim 8, in which said external source is an arc-melting, molten-lead dispensing means (2).

10. A method according to claim 1, in which said cavity is filled by melting a solid source (304) of said lead pre-positioned in said cavity.

11. A method according to claim 10, in which said melting is effected by induction-heating said solid source (304).

12. A method according to claim 10, wherein said melting is effected by means of a gas torch.

13. A method of forming a plate strap (54,46) for joining a set of aligned, upstanding, like-polarity, lead-acid, storage battery plate lugs (8,26,40) together in a cell element comprising a plurality of first polarity plates (48) alternately interleaved with a plurality of opposite polarity plates (50), said plates (48,50) each being separated one from the other by a bibulous, fibrous, glass mat (30;136) and having a plate lug (8,26,40) projecting therefrom, wherein said lug (8,26,40) has a root portion (44,130) proximate said plate (48,50) and a distal portion remote from said plate (48,50) for joining to said plate strap (54,46), said method comprising the steps of: stacking said plates (48,50) in said cell element so that lugs (8,26,40) of like polarity plates are aligned with each other along one side of said cell element; positioning a mould (10;120) about said set of aligned lugs (8,26,40), said mould (10;120) comprising a body (14) having a pair of opposing internal walls (22) defining a mould cavity (16;128) for shaping said plate strap (54,46), said cavity (16;128) having a mouth (24;122) on an underside (38;132) of said body (14) for admitting said like-polarity lugs (8,26,40) into said cavity (16;128); filling said cavity (16;128) with sufficient molten lead (6) as to melt said lugs (8,26,40) and to form said plate strap (54;46); and allowing said lead to solidify and bond said lugs (8,26,40) together via said plate strap (54,46), characterised in that a portion (32;134) of said glass mat (30;136) projects beyond the edges of said plates (48,50) along said one side, said portion including a mould-forming segment sandwiched between said root portions (44;130) of adjacent like-polarity lugs (8,26,40) and lateral segments extending laterally outwards of said lugs (8,26,40); the mould (10;120) includes means on the underside (38;132) of said body (14) for compressing said lateral segments in the direction of said cell element when said mould (10;120) is positioned about said lugs (8,26,40); and said mat (30;136) serves as the floor of said cavity (16;128) and prevents said molten lead (6) from draining from said cavity (16;128) via said mouth (24;122);

14. A method according to claim 13, in which said cell elements are positioned in a battery container (12), and said straps (54,46) are formed in said container (12).

15. A method according to claim 14, in which each of said cell elements is positioned in a separate compartment (18) of a multi-compartment container (12), said compartments (18) are separated one from the other by a partition (20) having an opening (56) therethrough lying intermediate and aligned with two of said sets of lugs (8,26,40) and adapted to receive an intercell connector for electrically connecting said sets in adjacent compartments (18), and wherein a mould (10) is positioned about each of said sets and said molten metal is cast in a single operation.

16. A lead acid storage battery having at least one cell element comprising a plurality of alternated interleaved positive and negative polarity plates (48,50) separated one from the other by a bibulous, fibrous glass mat (30), said positive polarity plates (50) being electrically joined to each other by a positive plate strap moulded thereto and said negative polarity plates (48) being electrically joined to each other by a negative plate strap moulded thereto, characterised in that said mat (30) has a compressed, perimetrical portion (32) which extends beyond the edges of said plates (48,50) along one side of said element and said straps contiguously overlie said compressed portion (32).
